(19) Europäisches Patentamt
European Patent Office
Office européen des brevets

(11) **EP 4 529 322 A1**

(12) **EUROPEAN PATENT APPLICATION**
published in accordance with Art. 153(4) EPC

(43) Date of publication:
26.03.2025 Bulletin 2025/13

(21) Application number: 23887427.5

(22) Date of filing: 30.05.2023

(51) International Patent Classification (IPC):
*H04W 72/04* (2023.01)

(52) Cooperative Patent Classification (CPC):
H04W 72/04; H04W 72/12

(86) International application number:
PCT/CN2023/096987

(87) International publication number:
WO 2024/098728 (16.05.2024 Gazette 2024/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 11.11.2022 CN 202211414750

(71) Applicant: ZTE Corporation
Shenzhen, Guangdong 518057 (CN)

(72) Inventors:
• CHEN, Shijun
  Shenzhen, Guangdong 518057 (CN)
• CHEN, Dawei
  Shenzhen, Guangdong 518057 (CN)
• LUO, Feixiong
  Shenzhen, Guangdong 518057 (CN)
• LI, Junqiang
  Shenzhen, Guangdong 518057 (CN)

(74) Representative: Aipex B.V.
Vestdijk 51
5611 CA Eindhoven (NL)

(54) **BALANCED WIRELESS SENSING METHOD, COMMUNICATION NODE AND STORAGE MEDIUM**

(57) Provided are a balanced wireless sensing method, a communication node, and a storage medium. The balanced wireless sensing method includes determining a delay-Doppler spectrum of a received signal in the current sensing period; jointly partitioning the delay range and the angle range of the sensed received signal, where a joint partition includes a delay partition and an angle partition; and determining an angle traversal step size corresponding to each delay partition and a preset number of sensed objects in each joint partition; for each joint partition, sensing information about at most the preset number of sensed objects in the joint partition according to the delay-Doppler spectrum and the angle traversal step size of the joint partition; determining a trajectory within a sensing range according to information sensed in multiple sensing periods; and determining a moving object according to the trajectory.

| | |
|---|---|
| Determine a delay-Doppler spectrum of a received signal in the current sensing period | S110 |
| Jointly partition the delay range and the angle range of the sensed received signal, where a joint partition includes a delay partition and an angle partition; and determine an angle traversal step size corresponding to each delay partition and a preset number of sensed objects in each joint partition | S120 |
| For each joint partition, sense information about at most the preset number of sensed objects in the joint partition according to the delay-Doppler spectrum and the angle traversal step size of the joint partition | S130 |
| Determine a trajectory within a sensing range according to information sensed in multiple sensing periods | S140 |
| Determine a moving object according to the trajectory | S150 |

**FIG. 4A**

EP 4 529 322 A1

## Description

TECHNICAL FIELD

The present application relates to the field of communications, for example, a balanced wireless sensing method, a communication node, and a storage medium.

BACKGROUND

The ubiquitous intelligent technology includes the ubiquitous sensing technology, the ubiquitous computing technology, and product development. Ubiquitous intelligence requires a ubiquitous system, but only the wireless communication network satisfies the ubiquity requirements in the deployed system. Therefore, ubiquitous sensing and ubiquitous computing using a wireless communication network become the main feasible technical approach.

Ubiquitous sensing requires sensing in various complex scenarios. In the related art, the problem of unbalanced sensing occurs in sensing a moving object in a complex scenario.

SUMMARY

The present application provides a balanced wireless sensing method, a communication node, and a storage medium.

In a first aspect, an embodiment of the present application provides a balanced wireless sensing method.

The balanced wireless sensing method includes determining a delay-Doppler spectrum of a received signal in the current sensing period; jointly partitioning the delay range and the angle range of the sensed received signal, where a joint partition includes a delay partition and an angle partition; and determining an angle traversal step size corresponding to each delay partition and a preset number of sensed objects in each joint partition; for each joint partition, sensing information about at most the preset number of sensed objects in the joint partition according to the delay-Doppler spectrum and the angle traversal step size of the joint partition; determining a trajectory within a sensing range according to information sensed in multiple sensing periods; and determining a moving object according to the trajectory.

In a second aspect, an embodiment of the present application provides a communication node. The communication node includes at least one processor; and a storage apparatus configured to store at least one program. The at least one processor is configured to perform the balanced wireless sensing method of any embodiment of the present application when executing the at least one program.

In a third aspect, an embodiment of the present application provides a storage medium storing a computer program which, when executed by a processor, causes the processor to perform the balanced wireless sensing method of any embodiment of the present application.

BRIEF DESCRIPTION OF DRAWINGS

FIG. 1 is a diagram illustrating a scenario of human sensing in a complex environment according to an embodiment of the present application.

FIG. 2 is a diagram illustrating a scenario of vehicle sensing on the ground according to an embodiment of the present application.

FIG. 3 is a diagram illustrating a communication system for a balanced wireless sensing method according to an embodiment of the present application.

FIG. 4A is a flowchart of a balanced wireless sensing method according to an embodiment of the present application.

FIG. 4B is a diagram illustrating the relationship between a sensing period, a sensing signal period, and a sensing signal length according to an embodiment of the present application.

FIG. 4C is a diagram illustrating the relationship between delay partitions and angle traversal step sizes according to an embodiment of the present application.

FIG. 4D is a diagram illustrating detection of sensed objects based on delay-Doppler spectrum partitioning according to an embodiment of the present application.

FIG. 4E is a diagram illustrating the relationship between delay partitions and angle partitions according to an embodiment of the present application.

FIG. 4F is a diagram illustrating a delay-arrival-angle spectrum according to an embodiment of the present application.

FIG. 4G is a diagram illustrating the delay-arrival-angle spectrum of sensed objects in multiple consecutive sensing periods according to an embodiment of the present application.

FIG. 4H is a diagram illustrating curve-fitting trajectories for sensing moving objects according to an embodiment of the present application.

FIG. 4I is a diagram illustrating a scenario of Unmanned Aerial Vehicle (UAV) sensing according to an embodiment of the present application.

FIG. 4J is a diagram illustrating a simulation result of an angle partitioning method (a) according to an embodiment of the present application.

FIG. 4K is a diagram illustrating a simulation result of an angle partitioning method (b) according to an embodiment of the present application.

FIG. 4L is a diagram illustrating a scenario of a running bus according to an embodiment of the present application.

FIG. 4M is a diagram illustrating a simulation result of an angle partitioning method (a) according to an embodiment of the present application.

FIG. 4N is a diagram illustrating a simulation result of an angle partitioning method (b) according to an embodiment of the present application.

FIG. 4O is a diagram illustrating a trajectory fitting result of an angle partitioning method (a) according to an embodiment of the present application.

FIG. 4P is a diagram illustrating a trajectory fitting result of an angle partitioning method (b) according to an embodiment of the present application.

FIG. 4Q is a diagram illustrating a trajectory fitting result of an angle partitioning method (b) according to an embodiment of the present application.

FIG. 5 is a block diagram of a balanced wireless sensing apparatus according to an embodiment of the present application.

FIG. 6 is a block diagram of a communication node according to an embodiment of the present application.

## DETAILED DESCRIPTION

Embodiments of the present application are described hereinafter in conjunction with drawings.

The operations illustrated in the flowcharts among the drawings may be performed by, for example, a computer system capable of executing a set of computer-executable instructions. Moreover, although logical sequences are illustrated in the flowcharts, in some cases, the illustrated or described operations may be performed in sequences different from those described herein.

The terms "first", "second" and the like herein are used for distinguishing between similar objects and are not necessarily used for describing a particular sequence or order.

On one hand, intelligent technology deeply integrates into people's lives, bringing significant convenience and new experiences. On the other hand, it will penetrate various industries, driving industrial upgrades and improving industrial efficiency through intelligent solutions. The development in these two directions will greatly liberate humanity, freeing people from the constraints of low-level production.

The ubiquitous intelligent technology mainly includes the ubiquitous sensing technology, the ubiquitous computing technology, and product development. Ubiquitous intelligence requires a ubiquitous system, but only a wireless communication network satisfies the ubiquity requirements in the deployed system. Therefore, ubiquitous sensing and ubiquitous computing using the wireless communication network become the main feasible technical approach.

In the field of sensing, most in-depth research has been conducted in the radar domain. The main application scenarios for radar equipment include aircraft detection, such as airport radar, and short-range sensing, such as automotive radar. Both of these scenarios fall under simple scenarios. Ubiquitous sensing needs to be able to operate in various complex scenarios, such as indoor multipath environments, ground with multiple buildings, multi-vehicle environments, and crowded shopping malls. Research on sensing in complex environments is limited, and commercially viable sensing technologies for such environments are even fewer. Sensing in complex environments is a research hotspot in both standardization and academia, and it is at the early stage of technological breakthroughs.

Wireless sensing technologies vary significantly across different scenarios. For low-altitude environments, such as UAV sensing, the background is typically open, and generally, only the echo signals from the sensed objects are present. The separation of the signals in terms of distance, angle, and speed is usually quite good, making it relatively easy to separate and identify the signals.

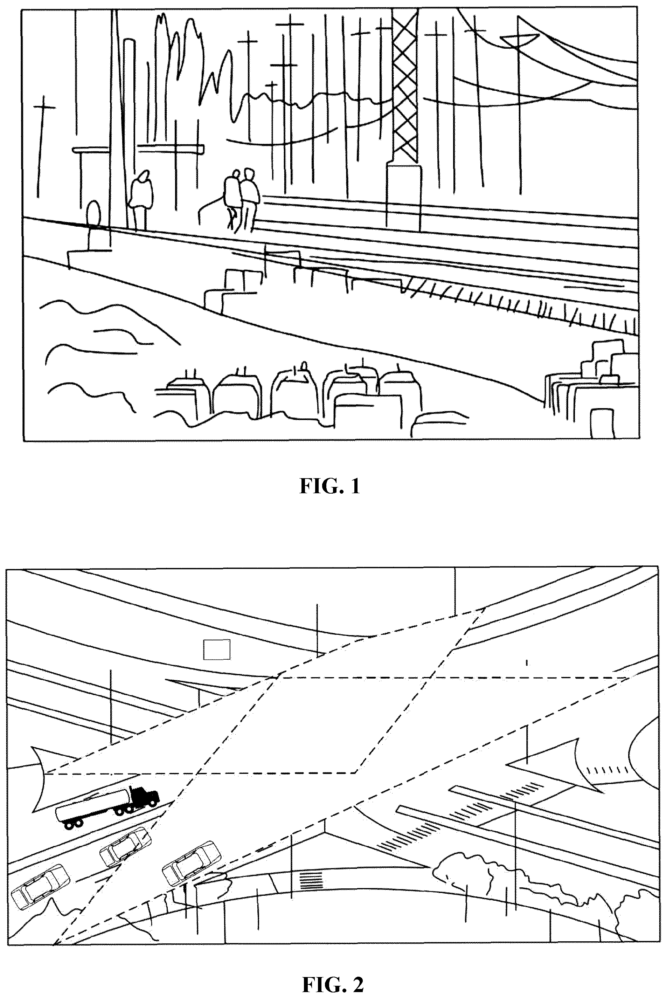

FIG. 1 is a diagram illustrating a scenario of human sensing in a complex environment according to an embodiment of the present application. FIG. 2 is a diagram illustrating a scenario of vehicle sensing on the ground according to an embodiment of the present application. FIG. 1 and FIG. 2 illustrate personnel sensing and vehicle sensing in complex scenarios. It can be seen that on the ground, there are numerous reflectors, and multipath propagation is typically present. In most cases, there are more than ten propagation paths, and often the energy of the reflected signals from the environment exceeds that of the echo signals from moving objects. On the ground, the signals from sensed objects and the signals reflected from the environment have low separation in terms of speed, angle, and distance and often are mixed together, posing significant challenges for traditional wireless sensing. Moreover, angle sensing has increasing errors and more uneven object-sensing distribution with greater distances. An important issue for sensing based on communication networks is how to achieve a balance in sensing opportunities for multiple sensed objects and ensure consistency in sensing errors within complex sensing spaces.

Based on this, the present application provides a balanced wireless sensing method. The method can achieve balanced sensing of multiple object trajectories in complex multipath environments, thereby improving a balance in sensing opportunities and a balance in errors.

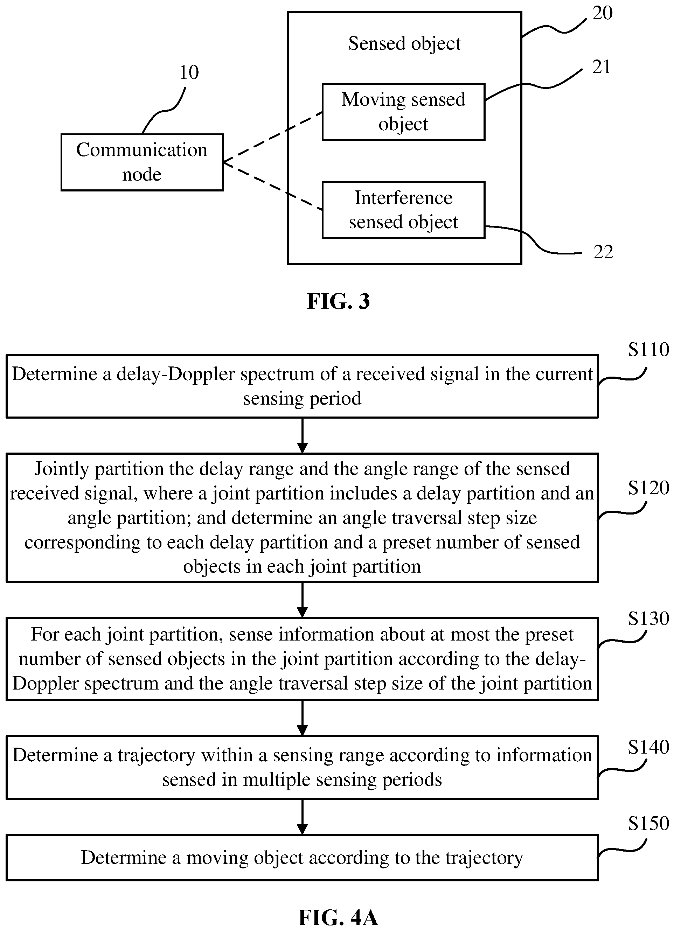

FIG. 3 is a diagram illustrating a communication system for a balanced wireless sensing method according to an embodiment of the present application. In the communication system, a communication node 10 performs sensing of sensed objects 20. The sensed objects 20 include, but are not limited to, moving sensed objects 21 that move over time and interference sensed objects 22. The position of each interference sensed object 22 may be fixed.

In the solution of this embodiment of the present application, there are one or more moving sensed objects 21 and one or more interference sensed objects 22. This embodiment of the present application does not limit the number of moving sensed objects 21 and the number of interference sensed objects 22.

The solution of this embodiment of the present application can be applied to various communication systems, for example, a wideband code division multiple access (WCDMA) mobile communication system, an evolved universal terrestrial radio access network (E-UTRAN) system, a next generation radio access network (NG-RAN) system, a long term evolution (LTE) system, a worldwide interoperability for microwave access (WiMAX) communication system, fifth generation (5G) systems such as new radio (NR), and future communication systems such as a 6G system.

The solution of this embodiment of the present application can be applied to various communication technologies, for example, microwave communication, optical communication, and millimeter-wave communication. This embodiment of the present application does not limit the technologies and types of equipment used.

The communication node of the present application may be an evolved NodeB (eNB), a Transmission Reception Point (TRP), a Next Generation NodeB (gNB) in NR systems, or a base station in other future mobile communication systems. This embodiment of the present application does not limit the technologies and types of equipment used by the sending node.

In this embodiment of the present application, the moving sensed object 21 is a user-side entity, such as a mobile phone, for receiving or sending signals. The moving sensed object may also be referred to as a terminal, user equipment (UE), mobile station (MS), or mobile terminal (MT), among other terms. The moving sensed object 21 may be, for example, a vehicle with communication capabilities, smart vehicle, mobile phone, wearable device, tablet, computer with wireless transceiver functionality, virtual reality (VR) device, augmented reality (AR) device, wireless receiving node device in industrial control, wireless receiving node device in self-driving, device in transportation safety, or device in smart city. This embodiment of the present application does not limit the technologies and types of equipment used by the moving sensed object 21.

Based on the preceding communication system, the following provides an example description of the balanced wireless sensing method of this embodiment of the present application.

In an example embodiment, FIG. 4A is a flowchart of a balanced wireless sensing method according to an embodiment of the present application. This method is applicable to the scenario of balanced sensing of sensed objects. This method can be performed by a balanced wireless sensing apparatus of the present application. The balanced wireless sensing apparatus can be implemented by software and/or hardware and integrated in the communication node. The communication node may be a sensing receiver or a server. The sensing receiver may be considered as a device for performing sensing. In the case where the communication node is a server, the server may be considered as the computational center used by the sensing receiver to determine a moving object. The server can receive information transmitted by the sensing receiver, such as the received signal and the sent sensing signal, to determine the moving object.

The balanced wireless sensing method of the present application can be considered as a balanced sensing method for multi-object estimation in a complex environment. The present application relates to the field of sensing, for example, a wireless precision-balanced and opportunity-balanced sensing method for moving objects in complex ground environments. In the present application, when object sensing is conducted, regions at different distances are divided into different delay partitions and angle partitions involving different angle traversal step sizes. This compensates for the lack of precise object search in distant regions so that objects have balanced opportunities to be sensed. This enables a balance in sensing opportunities, precise object sensing, and accurate trajectory drawing across different partitions within a large area.

As shown in FIG. 4A, the balanced wireless sensing method includes S110, S120, S130, S140, and S150.

In S110, a delay-Doppler spectrum of a received signal in the current sensing period is determined.

The current sensing period may be considered as the period during which the received signal is being sensed. The received signal may be considered as the signal sensed in the current sensing period. The delay-Doppler spectrum may be considered as a function of the delay and the Doppler frequency in the current sensing period, and this function is determined by the received signal and the sensing signal sent by the sensing receiver.

The sensing receiver may be a receiver having one or more antennas. This embodiment of the present application does not limit the number of antennas. The antennas may be a multiple-input multiple-output (MIMO) antenna array. Each antenna may correspond to one delay-Doppler spectrum.

In the present application, there may be one or more sensing periods, and each sensing period involves at least one received signal. This embodiment does not limit the number of the sensing periods and the number of received signals.

By S110, the channel impulse response vectors can be computed for the received signal received by each antenna in the current sensing period to obtain a channel impulse response vector corresponding to each antenna; and perform delay-Doppler spectrum computation on the channel impulse response vectors corresponding to all antennas to obtain the delay-Doppler spectrum for each antenna.

In S 120, the delay range and the angle range of the sensed received signal are jointly partitioned, where a joint partition includes a delay partition and an angle partition; and an angle traversal step size corresponding to each delay partition and a preset number of sensed objects in each joint partition are determined.

The delay range may be considered as the range of delays associated with the sensing of the received signal. The delay multiplied by the speed of light can be used to determine the distance. The angle range may be considered as the range of angles associated with the sensing of the received signal.

The joint partitioning may be considered as partitioning based on both delays and angles. For example, delay partitioning is performed, and then angle partitioning is performed on the delay partitions. Each delay partition may include one or more angle partitions. The number of angle partitions included in a delay partition may be associated with the magnitude of the delay of the delay partition.

Delay partitioning may be considered as partitioning based on delays. Angle partitioning may be considered as partitioning based on angles.

In an embodiment, the delay range can be partitioned into multiple delay partitions, and the angle range can be partitioned into multiple angle partitions.

After joint partitioning, the angle traversal step size corresponding to each delay partition may be determined. For example, for each joint partition, the angle traversal step size corresponding to the delay partition of the joint partition is determined. The preset number of sensed objects are determined for each joint partition. The angle traversal step size may be considered as the step size used for angle traversal in the delay partition. The sensed object may be considered as the object required to be sensed. The preset number may be a set number. In this application, a preset number of sensed targets required may be set for each joint partition.

Different joint partitions may involve the same or different preset numbers of sensed targets. This is not limited by the present application.

The angle traversal step size of a delay partition may be associated with the magnitude of the delay of the delay partition. The determination method is not limited here.

In S130, for each joint partition, information about at most the preset number of sensed objects in the joint partition is sensed according to the delay-Doppler spectrum and the angle traversal step size of the joint partition.

Information about the sensed object may be considered as information reflecting the content about the sensed object. For example, information about the sensed object may include the position, speed, energy, size, delay, and angle of the sensed object.

By S130, information about the sensed object in each joint partition can be sensed separately. The number of sensed objects does not exceed the preset number corresponding to the joint partition.

The joint partition may be considered as a partition based on both angles and delays. Each joint partition corresponds to an angle traversal range. The angle traversal step size is determined by the delay partition.

When determining information about the sensed object, it is feasible to perform direction filtering on the delay-Doppler spectrum in the joint partition in the angle traversal range of the joint partition by using the angle traversal step size of the delay partition of the joint partition; and select a delay-Doppler spectrum from the filtered delay-Doppler spectrums to determine the position of the sensed object.

In S140, a trajectory within a sensing range is determined according to information sensed in multiple sensing periods.

After information about the sensed object in the current sensing period is determined, information about the sensed object in subsequent sensing periods may be determined. By S140, the trajectory in the sensing range can be determined according to information about the sensed object that is sensed in multiple sensing periods. For example, information about the sensed object may be arranged in time order to determine the trajectory in the sensing range of the sensing receiver. Different information about the sensed object may be sorted separately or sorted after being combined. For example, a delay-arrival-angle spectrum may be formed according to information about the sensed object and then sorted to determine the trajectory. The sensing range may be considered as the range in which the sensing receiver performs sensing. The sensing range may include the delay range and the angle range.

In S 150, a moving object is determined according to the trajectory.

In the present application, the trajectory may be determined first and then the moving object is determined according to the trajectory.

Each trajectory may correspond to one moving object. Multiple trajectories may correspond to multiple moving objects.

According to the balancing method of this embodiment of the present application, information about the sensed object in each joint partition is determined when determining the moving object based on the trajectory. The joint partition includes a delay partition and an angle partition that cooperate to ensure a balance in sensing opportunities. In each joint partition, information about the sensed object may be determined by the corresponding angle traversal step size and delay-Doppler spectrum. The delay partitions of different joint partitions correspond to different angle traversal step sizes, ensuring a balance in sensing errors.

Based on the previous embodiments, variant embodiments of the previous embodiments are provided. For brevity, only differences from the previous embodiments are described in the variant embodiments.

In an embodiment, partitioning the delay range and the angle range of the sensed received signal includes partitioning the delay range of the sensed received signal into one or more delay partitions and for each of the delay partitions, partitioning the delay partition into angle partitions. The angle partitions include one or more horizontal angle partitions and one or more elevation angle partitions. The delay partitions have the same or different lengths. The horizontal angle partitions have the same or different lengths. The elevation angle partitions have the same or different lengths.

In the case of joint partitioning of the delay range and the angle range, the delay range may be partitioned into delay partitions evenly or unevenly. Each delay partition may be divided into horizontal angle partitions in terms of a horizontal angle and elevation angle partitions in terms of an elevation angle.

The horizontal angle partitions in each delay partition may have the same or different lengths. The elevation angle partitions in each delay partition may have the same or different lengths.

In an embodiment, for each of the delay partitions, partitioning the delay partition into the angle partitions includes partitioning the delay partition into the angle partitions according to the delay magnitude of the delay partition.

The number of angle partitions included in a delay partition may be determined by the magnitude of the delay of the delay partition. The magnitude of the delay and the number of angle partitions are not limited here.

In an embodiment, the number of angle partitions in the nth delay partition is greater than or equal to the number of angle partitions in the (n - 1)th delay partition, and the delay of the nth delay partition is greater than the delay of the (n - 1)th delay partition.

In this embodiment, the greater the delay of the delay partition, the greater the number of angle partitions included in the delay partition, or the number of angle partitions included in the delay partition with a large delay and the number of angle partitions included in the delay partition with a small delay may be equal. Angle partitioning based on delay partitioning enables a balance in opportunities. n denotes a positive integer.

In an embodiment, the angle traversal step size of the mth delay partition is less than or equal to the angle traversal step size of the (m - 1)th delay partition, and the delay of the mth delay partition is greater than the delay of the (m - 1)th delay partition.

m denotes a positive integer. In this embodiment, a larger delay may correspond to a smaller angle traversal step size, and an angle traversal step size of a delay partition with a larger delay may be equal to an angle traversal step size of a delay partition with a smaller delay. Different angle traversal step sizes are set for different delay partitions, enabling a balance in errors.

In an embodiment, for each joint partition, sensing information about at most the preset number of sensed objects in the joint partition according to the delay-Doppler spectrum and the angle traversal step size of the joint partition includes for each joint partition, performing direction filtering on the delay-Doppler spectrum in the joint partition in the angle traversal range of the joint partition by using the angle traversal step size of the delay partition of the joint partition to obtain a first delay-Doppler spectrum; and for the first delay-Doppler spectrum in each joint partition, sensing information about at most the preset number of sensed objects in the joint partition.

The first delay-Doppler spectrum may be considered as a delay-Doppler spectrum selected from the direction-filtered delay-Doppler spectrums. The selection manner is not limited here.

In an embodiment, the value of the delay-frequency offset pair in the first delay-Doppler spectrum is a value with a maximum magnitude among pairs in the filtered delay-Doppler spectrums corresponding to the all traversed angles of the corresponding joint partition; and the angle of the pair is the angle corresponding to the filtered delay-Doppler spectrum with the maximum magnitude.

After the first delay-Doppler spectrum is determined for each joint partition, information about at most the preset number of sensed objects in the joint partition may be sensed. Delay-Doppler spectrums may be selected according to the energies of the delay-frequency offset pairs so that information about the sensed object can be determined.

The pair in the filtered delay-Doppler spectrum is the same as the delay-frequency offset pair in the first delay-Doppler spectrum. That is, the value of delay i is the same as the value of frequency offset x.

In an embodiment, the angle traversal range of the joint partition is determined according to the angle range corresponding to the angle partition of the joint partition.

The angle traversal range of a joint partition may be the angle range corresponding to angle partitions in the joint partition.

In an embodiment, for each joint partition, performing the direction filtering on the delay-Doppler spectrum in the joint partition in the angle traversal range of the joint partition by using the angle traversal step size of the delay partition of the joint partition to obtain the first delay-Doppler spectrum includes for each joint partition, traversing all angles in the angle traversal range of the joint partition by using the angle traversal step size of the delay partition of the joint partition to obtain filtered delay-Doppler spectrums corresponding to the all angles; and selecting the first delay-Doppler spectrum from the filtered delay-Doppler spectrums corresponding to the all angles of the joint partition.

Traversing all angles in the angle traversal range of the joint partition by using the angle traversal step size of the delay partition of the joint partition and using delay-Doppler spectrums corresponding to all traversed angles as filtered delay-Doppler spectrums mean filtering delay-Doppler spectrums in the angle traversal range by using the angle traversal step size to obtain filtered delay-Doppler spectrums corresponding to the all angles.

After the filtered delay-Doppler spectrums of the joint partition are obtained, the first delay-Doppler spectrum is selected from the filtered delay-Doppler spectrums. The filtering method is not limited. The filtering may be performed according to the magnitudes corresponding to the delay-frequency offset pairs. For example, the value with the maximum magnitude among pairs in the filtered delay-Doppler spectrums is used as the value of the delay-frequency offset pair in the first delay-Doppler spectrum, and the angle corresponding to the filtered delay-Doppler spectrum with the maximum magnitude is the angle of the delay-frequency offset pair.

In an embodiment, for the first delay-Doppler spectrum in each joint partition, sensing information about at most the preset number of sensed objects in the joint partition includes, for the first delay-Doppler spectrum in each joint partition, selecting at most the preset number of first delay-Doppler spectrums above a noise threshold in descending order of energies of all delay-frequency offset pairs in the first delay-Doppler spectrum; using the selected first delay-Doppler spectrums as second delay-Doppler spectrums; and calculating positions of all sensed objects in the second delay-Doppler spectrums according to the second delay-Doppler spectrums. Information about the sensed objects includes delays i, frequency offsets x, angles $i_2$, $i_3$, j1, and j2, positions, and energies corresponding to the second delay-Doppler spectrums.

The value of the noise threshold is not limited. In this embodiment, the second delay-Doppler spectrums can be selected from the first delay-Doppler spectrums according to the energies of the delay-frequency offset pairs. For example, at most the preset number of second delay-Doppler spectrums above the noise threshold are selected in descending order of energies.

After the second delay-Doppler spectrums are determined, the position of the sensed object may be determined according to the angle and the delay.

In an embodiment, determining the trajectory within the sensing range according to the information sensed in the multiple sensing periods includes arranging, in time order, the information sensed in the multiple sensing periods; and determining the trajectory within the sensing range according to an arrangement result.

In this embodiment, the information sensed in the multiple sensing periods is arranged, and the trajectory can be identified from the arrangement result. For example, trajectory identification is performed based on the sensing time interval and position interval between adjacent points.

In an embodiment, adjacent points in the trajectory satisfy at least one of the following conditions: The sensing time interval between the pth point and the (p + 1)th point is less than a set time threshold; or the position interval between the pth point and the (p + 1)th point is less than a set position threshold.

The value of the set time threshold is not limited. The value of the set position threshold is not limited.

The sensing time interval may be considered as the interval between the sensing time of the pth point and the sensing time of the (p + 1)th point. The position interval may be considered as the interval between the position of the pth point and the position of the (p + 1)th point.

In an embodiment, determining the moving object according to the trajectory includes determining each trajectory as one moving object.

Each trajectory is determined as one moving object. X trajectories correspond to X moving objects.

The following describes the present application by using examples. To overcome problems in sensing moving objects in complex ground interference environments, the present application uses the following solution:

In the first step, the sensing signal sending base station (that is, communication node) sends a sensing signal S on the set wireless resources according to the sensing signal period a2 in the sensing period a3.

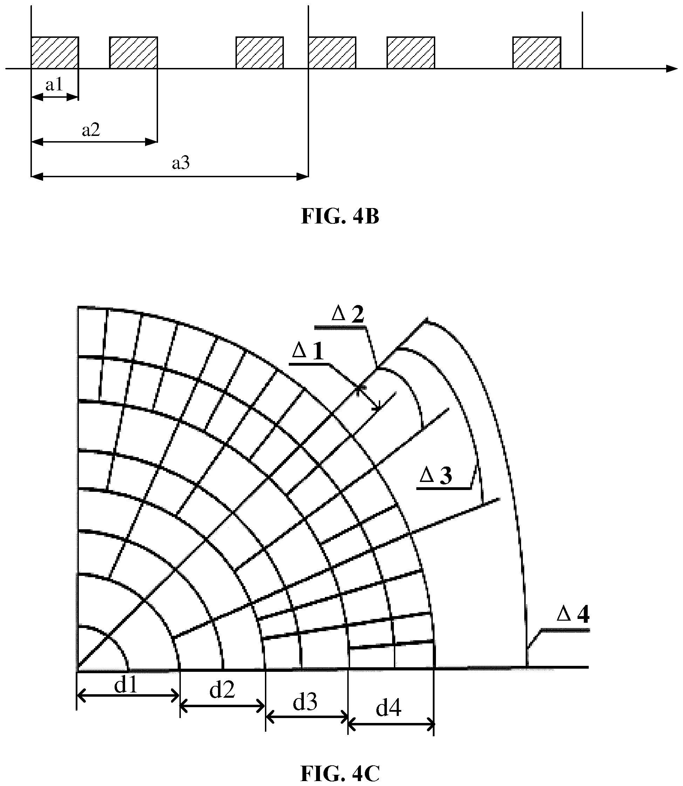

In the second step, the sensing signal receiving base station receives the current sensing signal y in the current sensing period z. Each received antenna signal $R_{m.n}(t)$ (received signal) is sampled according to the sampling period a4. Data is continuously sampled in a symbol duration a1 to form sample data $R_{m.n}(i, y)$, $i \in [0,a1/a4)$ of one symbol. m and n denote the serial numbers of elements in the antenna array. $m \in [0,M$ -1$]$,$n \in [0,N$ -1$]$. y denotes the currently received sensing signal period number. $y \in [0,a3/a2)$. FIG. 4B is a diagram illustrating the relationship between a sensing period, a sensing signal period, and a sensing signal length according to an embodiment of the present application. The relationship between the sensing period a3, the sensing signal period a2, and the sensing signal length a1 is shown in FIG. 4B.

Each received antenna signal is sampled. According to the sending signal S, it is calculated that the channel impulse response vector for each antenna is $c_{m.n}(i, y)$.

In the third step, in the current sensing period z, it is calculated for the channel impulse responses of all received sensing signals (y from 0 to a3/a2-1) that the delay-Doppler spectrum in the current sensing period is $d_{m.n}(i, x)$.

i denotes the sampling point serial number. x denotes the Doppler frequency. $x \in [0, a3 / a2)$

Through the preceding three steps, the delay-Doppler spectrum of the received signal in the current sensing period can be determined.

In the fourth step, delay-angle joint partitioning is performed.

Delay partitioning includes even partitioning or uneven partitioning. The number of partitions may be, but is not limited to, m1. The value of m1 is not limited. If even partitioning is performed and the width of a delay partition is a5, then m1 = a1/a5. Starting from the smallest delay, the delay interval widths between partitions are $\tau_0$, $\tau_1$, ..., and $\tau_{m1}$ respectively. For each partition, direction filtering is performed on all $d_{m.n}(i, x)$ by using the angle step sizes $\Delta 0$, $\Delta 1$, ..., and $\Delta m1$.

For each delay partition, the angle range is traversed to perform angle partitioning. The number of horizontal angle partitions is $n_{Hi}$. $i \in [1 ... m1]$. The widths of the horizontal angle partitions are $\gamma_{h1}$, $\gamma_{h2}$, ..., and $\gamma_{hnHi}$. The number of elevation angle partitions is $n_{Li}$. The widths of the elevation angle partitions are $\gamma_{L1}$, $\gamma_{L2}$, ..., and $\gamma_{LnLi}$.

For each delay-angle joint partition, the maximum delay-Doppler spectrum $M(i, i_2, i_3, x)$ is obtained, and the angle corresponding to each $(i, i_2, i_3, x)$ is recorded. The value of $M(i, i_2, i_3, x)$ is as follows: When the delay i is fixed, in direction filtering of the angle traversal range of the angle partitions indicated by i2 and i3, the maximum value is used as the value of $M(i, i_2, i_3, x)$, and the angle corresponding to the maximum value is used as the angle corresponding to $M(i, i_2, i_3, x)$. $i_2$ denotes the horizontal angle partition serial number. $i_3$ denotes the elevation angle partition serial number. i denotes the delay.

FIG. 4C is a diagram illustrating the relationship between delay partitions and angle traversal step sizes according to an embodiment of the present application. Different angle traversal step sizes are set according to delay partitions to improve long-distance angle traversal. See FIG. 4C. The delay size of a delay partition is associated with the value of the angle traversal step size corresponding to the delay partition. The larger the delay of the delay partition, the longer the corresponding angle traversal step size. The delay partition indicated by d1 may correspond to the angle traversal step size $\Delta 1$. The delay partition indicated by d2 may correspond to the angle traversal step size $\Delta 2$. The delay partition indicated by d3 may correspond to the angle traversal step size $\Delta 3$. The delay partition indicated by d4 may correspond to the angle traversal step size $\Delta 4$. That is, the angle traversal step size of the mth delay partition is less than the angle traversal step size of the (m - 1)th delay partition, where the delay of the mth delay partition is greater than the delay of the (m - 1)th delay partition.

The angle traversal step size corresponding to the delay partition indicated by d1 can also be equal to the angle traversal step size corresponding to the delay partition indicated by d2. This corresponds to that the angle traversal step size of the mth delay partition is equal to the angle traversal step size of the (m - 1)th delay partition, where the delay of the mth delay partition is greater than the delay of the (m - 1)th delay partition.

Delay partitions may be even or uneven. That is, the delay interval widths $\tau 0$, $\tau 1$, ..., and $\tau m1$ may be equal or unequal.

In the fifth step, for each delay-angle joint partition, the number of partitions is $\sum_{i_1=1}^{m1} n_L^{i_1} * n_H^{i_1}$. $\overline{\times}$ $M(i, i_2, i_3, x)$ There are $K_{i_1,i_2,i_3}$ sensed objects in each partition of the delay partitions and angle partitions. There are a total of

$$\sum_{i_1=1}^{m1}\sum_{i_2=1}^{n_{Hi}}\sum_{i_3=1}^{n_{Li}} K_{i_1}^{i_2,i_3}$$

sensed objects.

Pairs of the top $K_{i_1,i_2,i_3}$ peak values are selected from all $(i_1, i_2, i_3, x)$ in each partition of $M(i, i_2, i_3, x)$ in the current sensing period z to serve as $K_{i_1,i_2,i_3}$ sensed objects of the partition. Optionally, the K1th to K2th largest objects are selected. K2-K1=$K_{i_1,i_2,i_3}$. $i_1$ corresponds to the delay partition serial number.

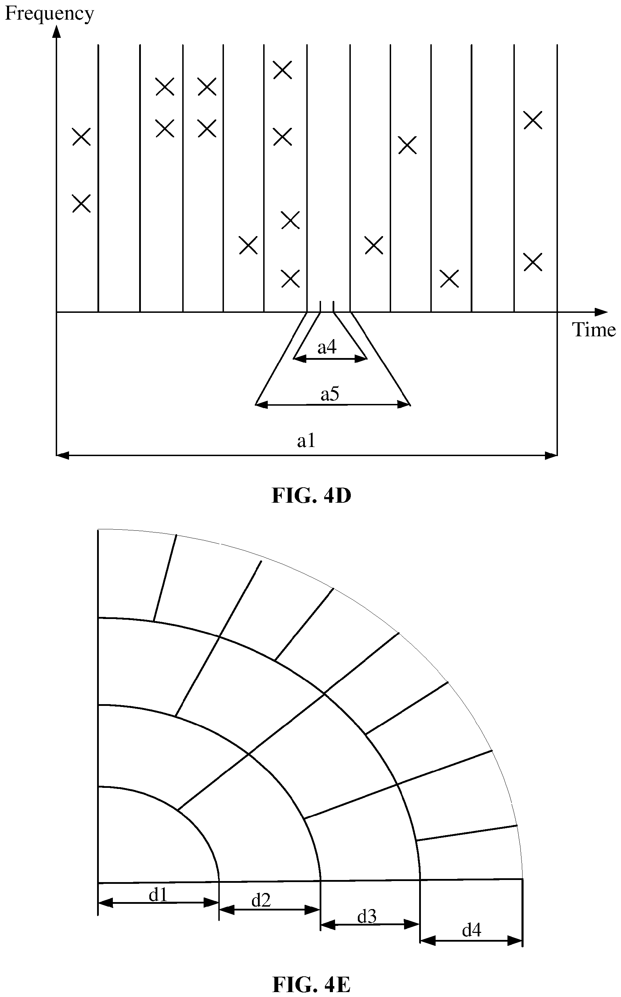

FIG. 4D is a diagram illustrating detection of sensed objects based on delay-Doppler spectrum partitioning according to an embodiment of the present application. The relationship between the partition width a5, the sensing signal length a1, and the sensing signal sampling period a4 is shown in FIG. 4D.

FIG. 4E is a diagram illustrating the relationship between delay partitions and angle partitions according to an embodiment of the present application. Delay-angle joint partitioning is shown in FIG. 4E. The delay size of a delay partition is associated with the number of angle partitions in the delay partition. The larger the delay of the delay partition, the greater the number of angle partitions in the delay partition. The number of angle partitions in the delay partition indicated by d1 is 1. The number of angle partitions in the delay partition indicated by d2 is 2. The number of angle partitions in the delay partition indicated by d3 is 4. The number of angle partitions in the delay partition indicated by d4 is 8. That is, the number of angle partitions in the nth delay partition is greater than the number of angle partitions in the (n - 1)th delay partition, and the delay of the nth delay partition is greater than the delay of the (n - 1)th delay partition.

In an embodiment, the number of angle partitions in the delay partition indicated by d1 may be equal to the number of angle partitions in the delay partition indicated by d2. That is, the number of angle partitions in the nth delay partition is equal to the number of angle partitions in the (n - 1)th delay partition, and the delay of the nth delay partition is greater than the delay of the (n - 1)th delay partition.

For all sensed objects, according to the corresponding angles and delay sample point numbers, the delay-arrival-angle spectrum $P_z(i, \beta)$ for the sensed objects in this sensing period is formed, with the corresponding values serving as the

$$\sum_{i_1=1}^{m1}\sum_{i_2=1}^{n_{Hi}}\sum_{i_3=1}^{n_{Li}} K_{i_1}^{i_2,i_3}$$

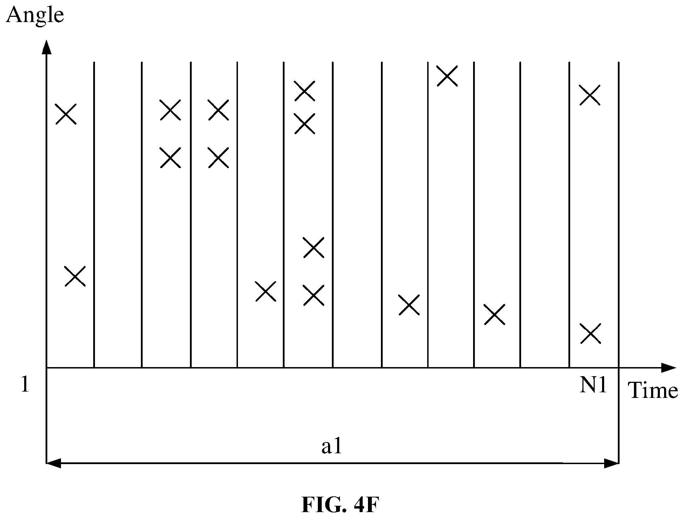

values of the sensed objects in $P_z(i, \beta)$. The spectrum contains objects. Where there is no object, 0 is assigned. FIG. 4F is a diagram illustrating a delay-arrival-angle spectrum according to an embodiment of the present application. The delay-arrival-angle spectrum for the sensed objects is shown in FIG. 4F.

Optionally, according to the number of sensed objects in the partition and according to the order of values, the serial numbers are used as the values of the sensed objects.

The delay-arrival-angle spectrum for the sensed objects in this period is optionally sent to the server.

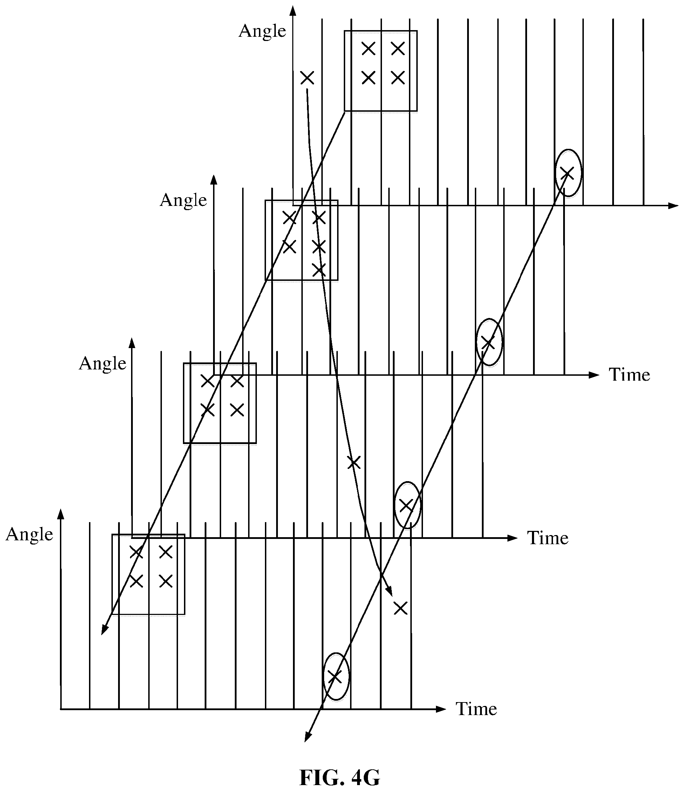

In the sixth step, steps one through five are repeated so that the delay-arrival-angle spectrum $P_{z+1}(i, \beta)$ for the sensed objects in the next sensing period is formed. This process continues to form the delay-arrival-angle spectrum for the sensed objects in consecutive sensing periods. FIG. 4G is a diagram illustrating the delay-arrival-angle spectrum of sensed objects in multiple consecutive sensing periods according to an embodiment of the present application. The delay-arrival-angle spectrum for the sensed objects in multiple consecutive sensing periods is shown in FIG. 4G. In FIG. 4G, trajectories indicated by rectangular boxes and circles correspond to interference sensed objects while the trajectory moving in the positive direction along the time axis corresponds to moving sensed objects. In FIG. 4G, first the trajectory is drawn, and then the moving object is determined. That is, first the trajectory moving along the positive direction of the time axis is determined, and then it is determined that the trajectory corresponds to the moving object.

In the seventh step, curve fitting is performed on continuous delay-arrival-angle spectrums; and the number of sensed objects, the moving trajectory of each sensed object, and the interval of the interference zone are determined according to the fitted curve.

A smooth continuous curve formed serves as a moving sensed object. Multiple smooth continuous curves formed serve as multiple moving sensed objects.

The sensed object region with relatively fixed angles and delays serve as the interference region.

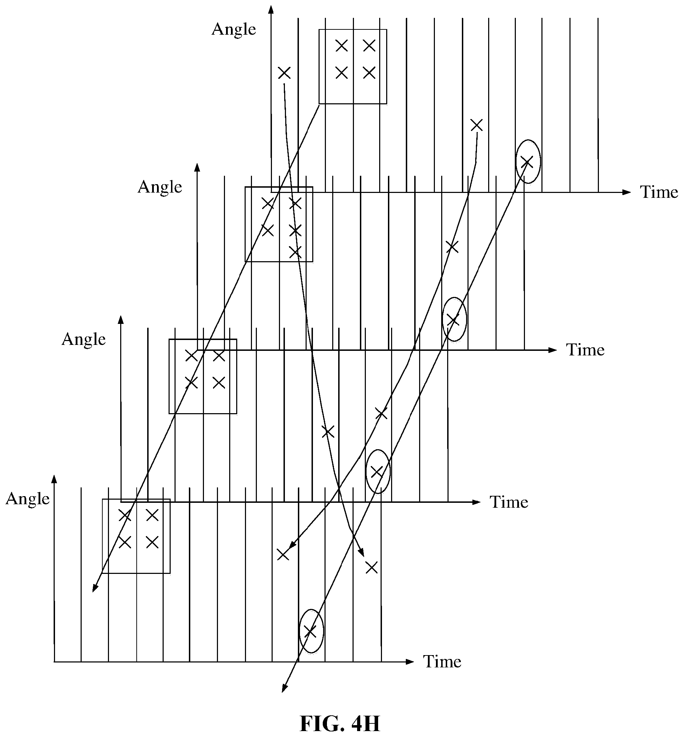

Curve fitting is optionally completed on the sensing server. FIG. 4H is a diagram illustrating curve-fitting trajectories for sensing moving objects according to an embodiment of the present application. FIG. 4H illustrates curve-fitting trajectories for sensing moving objects.

In step eight, the current position of the sensed object is determined preferably from the delay-arrival-angle spectrum of sensed objects in subsequent sensing periods according to the inertial trend determined by the moving trajectory of the sensed object.

"Each received antenna signal is sampled. According to the sending signal S, it is calculated that the channel impulse response vector for each antenna is $c_{m.n}(i, y)$." in the second step includes the following:

The sample data from each antenna is transformed into the frequency domain. The received data of each subcarrier is divided by the corresponding transmitted subcarrier signal to obtain the frequency-domain impulse response for each antenna. This frequency-domain impulse response is then transformed into the time domain to obtain the time-domain impulse response.

The delay-Doppler spectrum in the current sensing period is calculated in the third step in the following manner:

After the time-domain impulse responses of all sensing signals in one sensing period of each antenna are obtained, for each antenna's sensing signal, the time-domain impulse response starts at delay sample point number 0. Values at the same delay sample point number are extracted from the channel impulse responses of all sensing signals in the current sensing period. A Fourier transform is then performed to obtain the delay-Doppler spectrum in the current sensing period.

$$\left[d_{m.n}(i, \ 0)..d_{m.n}(i, \ x)..d_{m.n}\left(i, \ \tfrac{a3}{a2}\right)\right] =$$

$$FFT\left(\left[c_{m.n}(i, \ 0), c_{m.n}(i, \ 1)..c_{m.n}\left(i, \ \tfrac{a3}{a2}\right)\right]\right).$$

i denotes the delay sampling point serial number. x denotes the Doppler frequency. $x \in [0, a3/a2]$.

The operation "direction filtering is performed on all $d_{m.n}(i, x)$ to obtain the maximum delay-Doppler spectrum $M(i, i_2, i_3, x)$, and the angle corresponding to each $(i, i_2, i_3, x)$ is recorded" in the fourth step includes

Direction filtering is performed in the azimuth angle interval, that is, horizontal angle interval, $[\theta 1, \theta 2]$ by using a step $\Delta\theta$ and performed in the elevation angle interval $[\beta 1, \beta 2]$ by using a step $\Delta\beta$.

$$d(i, \ i_2, \ i_3, \ x, \ j1, \ j2) = \sum_{m,n} d_{m,n}(i,x) * g_{m,n}(\theta 1 + j1 * \Delta\theta, \beta 1 + j2 * \Delta\beta)$$

$$M(i, \ i_2, \ i_3, \ x) = \max_{j1, j2}(d(i, \ i_2, \ i_3, \ x, \ j1, \ j2))$$

The angle corresponding to the maximum value is used as the angle corresponding to $M(i, i_2, i_3, x)$. The determined maximum value is used as the magnitude of $M(i, i_2, i_3, x)$.

$\Delta\theta$ and $\Delta\beta$ are determined by the angle traversal step size set for each delay partition.

The horizontal angle interval $[\theta 1, \theta 2]$ and the elevation angle interval $[\beta 1, \beta 2]$ serve as the angle traversal range. The values of $[\theta 1, \theta 2]$ and $[\beta 1, \beta 2]$ are associated with angle partitions indicated by $i_2$ and $i_3$. The angle traversal range of a joint partition may be determined based on the angle range corresponding to angle partitions in the joint partition.

To determine $d(i, i_2, i_3, x, j1, j2)$, it is feasible to, for each joint partition, traverse all angles in the angle traversal range of the joint partition by using the angle traversal step size of the delay partition of the joint partition to obtain filtered delay-Doppler spectrums corresponding to the all angles.

To determine $M(i, i_2, i_3, x)$, it is feasible to select the first delay-Doppler spectrum from the filtered delay-Doppler spectrums corresponding to the all angles of the joint partition.

In the fifth step, the "top $K_{i1,i2,i3}$ peak values" are defined as follows: The top $K_{i1,i2,i3}$ are selected from the magnitudes corresponding to all pairs $(i, x)$ in the partitions of $M(i, i_2, i_3, x)$ sorted in descending order. The selected top $K_{i1,i2,i3}$ serve as the sensed objects. That is, for the first delay-Doppler spectrum in each joint partition, selecting at most the preset number of first delay-Doppler spectrums above a noise threshold in descending order of energies of all delay-frequency offset pairs in the first delay-Doppler spectrum.

Compared with the related art, the method of the present application can solve problems such as large sensing errors caused by interference in complex environments, mutual interference between the environment and sensed objects, and interference between multiple objects. With the delay-angle joint partitioning method in which the angle traversal step size decreases as the delay increases, a balance in errors and a balance in sensing opportunities are achieved in high-precision multi-object sensing in complex environments.

The following provides an example description of the balanced wireless sensing method by using embodiments.

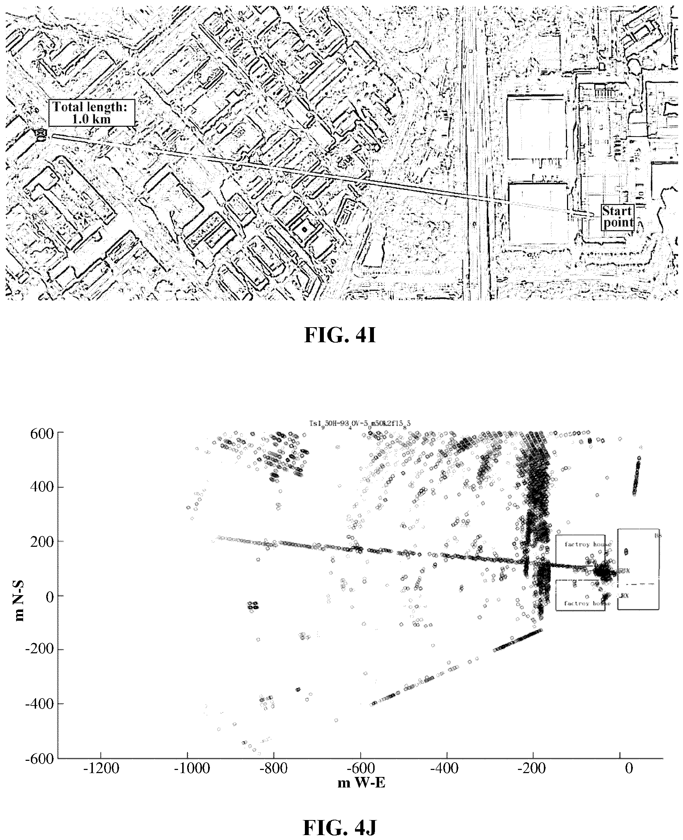

In an embodiment, provided is a UAV sensing scheme that achieves a balance in precision. FIG. 4I is a diagram illustrating a scenario of Unmanned Aerial Vehicle (UAV) sensing according to an embodiment of the present application. The UAV flies 1 km along the following route, with a sensing signal transmission period of 5 ms, a frequency of 4.9 GHz, and a bandwidth of 100 MHz. Different angle search step sizes (that is, angle traversal step sizes) are used in sensing the object.

The sensing signal S is sent periodically according to the set sending format.

The receiving base station uses an $8\times8$ antenna MIMO array. Each antenna receives the sensing signal periodically. m $\in$ [0, 7]. n $\in$ [0, 3]. Each received antenna signal is sampled. According to the sending signal S, the channel impulse response vector for each antenna is calculated.

The Doppler-delay spectrum is calculated. For each antenna's sensing signal, the time-domain impulse response starts at delay sample point number 0. Values at the same delay sample point number are extracted from the channel impulse responses of all sensing signals in the current sensing period. A Fourier transform is then performed to obtain the delay-Doppler spectrum in the current sensing period. It is a 4096*64 matrix.

Delay partitioning is performed on the Doppler-delay spectrum. Every 50 Ts are classified into one partition. Less than 50 Ts are classified into one partition. Therefore, there are a total of 9 partitions.

Angle partitioning is performed on each delay partition of the Doppler-delay spectrum.

To compare the advantages of the present application, two angle partitioning methods are used:

Angle partitioning method (a): In each delay partition, the azimuth angle search range is set to -90° to 40° with a step size of 1°, and the elevation angle search range is set to 3° to 8° with a step size of 1°. The number of detected objects is 2.

Angle partitioning method (b): In delay partitions 1 and 2, the azimuth angle search range is set to -90° to 40° with a step size of 1°, and the elevation angle search range is set to 3° to 8° with a step size of 1°. The number of detected objects is 2. In delay partitions 3 to 5, the azimuth angle search range is set to -90° to 40° with a step size of 0.5°, and the elevation angle search range is set to 3° to 8° with a step size of 0.5°. The number of detected objects is 2. In delay partitions 6 to 9, the azimuth angle search range is set to -90° to 40° with a step size of 0.25°, and the elevation angle search range is set to 3° to 8° with a step size of 0.25°. The number of detected objects is 2.

Direction filtering is performed on the Doppler-delay spectrum. In each delay partition, the steering vector for each azimuth and elevation angle combination is dot-multiplied with the Doppler data from the 64 antennas. The angle corresponding to the maximum result is used as the angle corresponding to M($i, i_2, i_3$, x). The determined maximum value is used as the magnitude of M($i, i_2, i_3$, x). The product of the delay position of the maximum value and the speed of light is used as the target distance. The position of the object can be determined according to the distance and angle information.

All subsequent time points are processed in the preceding manner to generate an estimated map of the object.

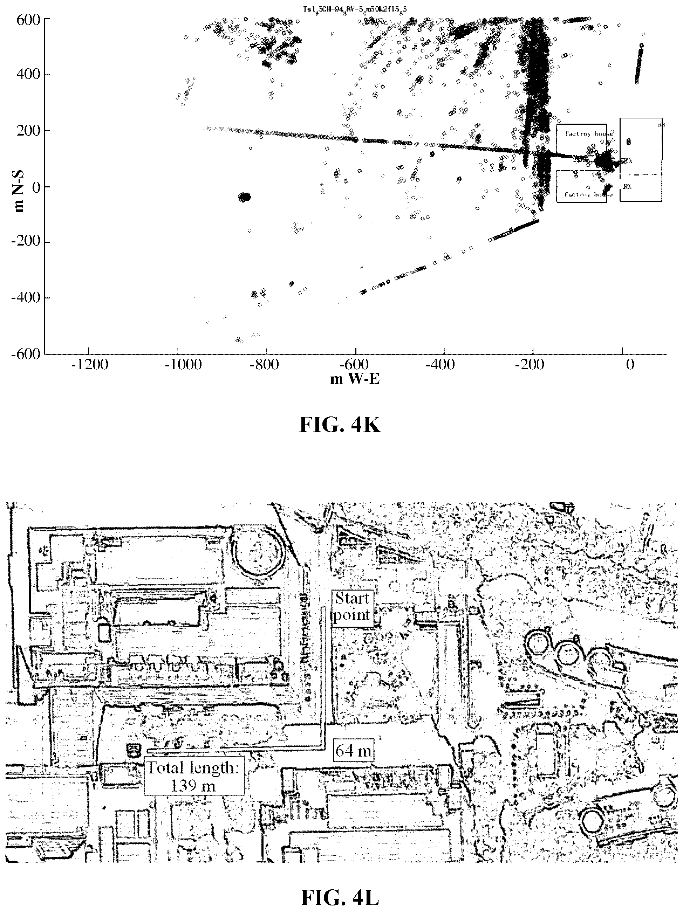

FIG. 4J is a diagram illustrating a simulation result of an angle partitioning method (a) according to an embodiment of the present application. FIG. 4K is a diagram illustrating a simulation result of an angle partitioning method (b) according to an embodiment of the present application.

As seen from FIGS. 4j and 4k, the simulation result diagram of FIG. 4J has a better trajectory fitting effect.

In an embodiment, provided is a bus running scheme that achieves a balance in precision.

FIG. 4L is a diagram illustrating a scenario of a running bus according to an embodiment of the present application. The bus runs along the following route, with a sensing signal transmission period of 5 ms, a frequency of 4.9 GHz, and a bandwidth of 100 MHz. Different angle search step sizes are used in sensing the object.

(1) The sensing signal S is sent periodically according to the set sending format.

(2) The receiving base station uses an $8\times8$ antenna MIMO array. Each antenna receives the sensing signal periodically. m $\in$ [0, 7]. n $\in$ [0, 3]. Each received antenna signal is sampled. According to the sending signal S, it is calculated that the channel impulse response vector for each antenna is $c_{m.n}(i,$ y).

(3) The Doppler-delay spectrum is calculated. For each antenna's sensing signal, the time-domain impulse response starts at delay sample point number 0. Values at the same delay sample point number are extracted from the channel impulse responses of all sensing signals in the current sensing period. A Fourier transform is then performed to obtain the delay-Doppler spectrum in the current sensing period. It is a 4096*64 matrix.

(4) Delay partitioning is performed on the Doppler-delay spectrum. The value range of Ts is 160 to 248. Every 15 Ts are classified into one partition. Less than 15 Ts are classified into one partition. Therefore, there are a total of 6 partitions.

(5) Angle partitioning is performed on each delay partition of the Doppler-delay spectrum.

To compare the advantages of the present application, two angle partitioning methods are used:

Angle partitioning method (a): In each delay partition, the azimuth angle search range is set to -16° to 5° with a step size of 1°, and the elevation angle search range is set to 4° to 8° with a step size of 1°. The number of detected objects is 2.

Angle partitioning method (b): In delay partitions 1 and 2, the azimuth angle search range is set to -16° to 5° with a step size of 0.5°, and the elevation angle search range is set to 3° to 8° with a step size of 0.5°. The number of detected objects is 2. In delay partitions 3 and 4, the azimuth angle search range is set to -16° to 5° with a step size of 1°, and the elevation angle search range is set to 3° to 8° with a step size of 1°. The number of detected objects is 2. In delay partitions 5 and 6, the azimuth angle search range is set to -16° to 5° with a step size of 0.25°, and the elevation angle search range is set to 3° to 8° with a step size of 0.25°. The number of detected objects is 2.

(6) Direction filtering is performed on the Doppler-delay spectrum. In each delay partition, the steering vector for each azimuth and elevation angle combination is dot-multiplied with the Doppler data from the 64 antennas. The angle corresponding to the maximum result is used as the angle corresponding to $M(i, i_2, i_3, x)$. The determined maximum value is used as the value of $M(i, i_2, i_3, x)$. The delay position of the maximum value, multiplied by the speed of light, is used as the target distance. The position of the object can be determined according to the distance and angle information.

(7) All subsequent time points are processed according to steps (1) through (6) to generate an estimated map of the object.

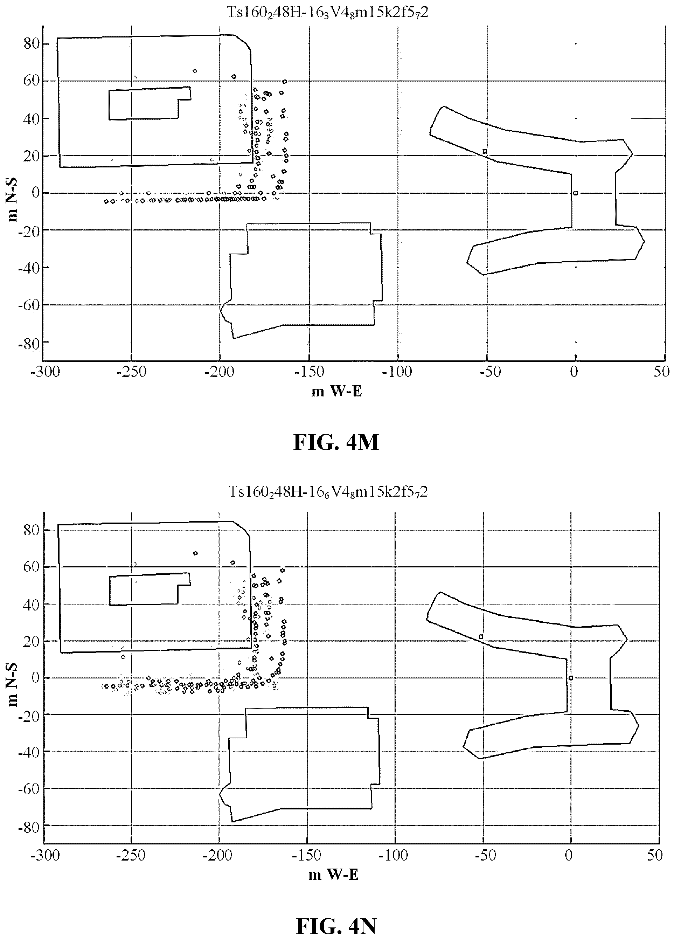

FIG. 4M is a diagram illustrating a simulation result of an angle partitioning method (a) according to an embodiment of the present application. FIG. 4N is a diagram illustrating a simulation result of an angle partitioning method (b) according to an embodiment of the present application.

The simulation result trajectory in FIG. 4N shows more coherent details.

In an embodiment, provided is a UAV sensing scheme that achieves a balance in sensing opportunities. The UAV flies 1 km along the route in FIG. 4I, with a sensing signal transmission period of 5 ms, a frequency of 4.9 GHz, and a bandwidth of 100 MHz. Different angle partitions are used in sensing the object.

(1) The sensing signal S is sent periodically according to the set sending format.

(2) The receiving base station uses an 8×8 antenna MIMO array. Each antenna receives the sensing signal periodically. $m \in [0, 7]$. $n \in [0, 3]$. Each received antenna signal is sampled. According to the sending signal S, it is calculated that the channel impulse response vector for each antenna is $c_{m.n}(i, y)$.

(3) The Doppler-delay spectrum is calculated. For each antenna's sensing signal, the time-domain impulse response starts at delay sample point number 0. Values at the same delay sample point number are extracted from the channel impulse responses of all sensing signals in the current sensing period. A Fourier transform is then performed to obtain the delay-Doppler spectrum in the current sensing period. It is a 4096*64 matrix.

(4) Delay partitioning is performed on the Doppler-delay spectrum. Every 50 Ts are classified into one partition. Less than 50 Ts are classified into one partition. Therefore, there are a total of 9 partitions.

(5) Angle partitioning is performed on each delay partition of the Doppler-delay spectrum.

To compare the advantages of the present application, two angle partitioning methods are used:
Angle partitioning method (a): In each delay partition, the azimuth angle search range is set to -90° to -40° with a step size of 1°, and the elevation angle search range is set to 3° to 8° with a step size of 1°. The number of detected objects is 2.

Angle partitioning method (b): In each delay partition, the azimuth angle search range is set to -90° to -40° and -40° to 40° with a step size of 1°, and the elevation angle search range is set to 3° to 8° with a step size of 1°. The number of detected objects is 2.

(6) Direction filtering is performed on the Doppler-delay spectrum. In each delay partition, the steering vector for each azimuth and elevation angle combination is dot-multiplied with the Doppler data from the 64 antennas. The angle corresponding to the maximum result is used as the angle corresponding to $M(i, i_2, i_3, x)$. The determined maximum value is used as the value of $M(i, i_2, i_3, x)$. The delay position of the maximum value, multiplied by the speed of light, is used as the target distance. The position of the object can be determined according to the distance and angle information.

(7) All subsequent time points are processed according to steps (1) through (6) to generate an estimated map of the object.

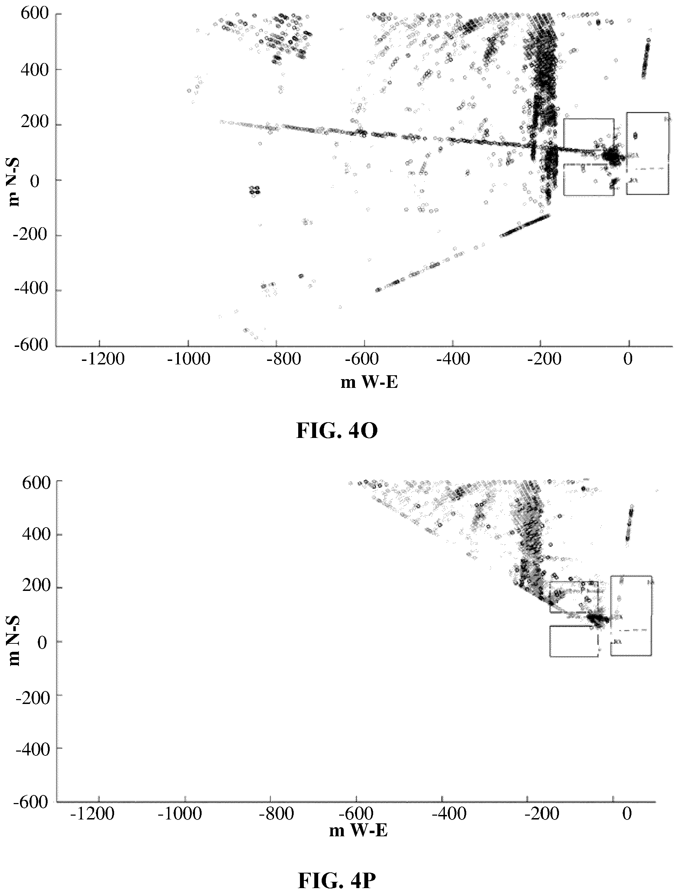

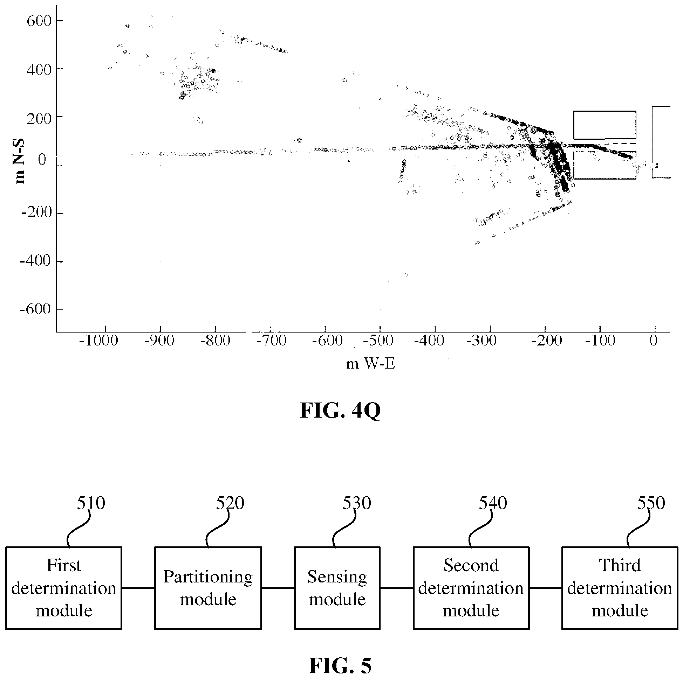

FIG. 4O is a diagram illustrating a trajectory fitting result of an angle partitioning method (a) according to an embodiment of the present application. FIG. 4P is a diagram illustrating a trajectory fitting result of an angle partitioning method (b) according to an embodiment of the present application. FIG. 4Q is a diagram illustrating a trajectory fitting result of an angle partitioning method (b) according to an embodiment of the present application.

In the result of FIG. 4O, there are discontinuities in the trajectory. In the result of (b), the result of angle -90° to -40° involves an interference object, and the result of angle -40° to 40° encompasses a target trajectory that is relatively continuous.

In an example embodiment, the present application provides a balanced wireless sensing apparatus. FIG. 5 is a block diagram of a balanced wireless sensing apparatus according to an embodiment of the present application. The apparatus is integrated in a communication node. As shown in FIG. 5, the apparatus includes a first determination module 510, a partitioning module 520, a sensing module 530, a second determination module 540, and a third determination module 550.

The first determination module 510 is configured to determine a delay-Doppler spectrum of a received signal in the current sensing period. The partitioning module 520 is configured to jointly partition the delay range and the angle range of the sensed received signal, where a joint partition includes a delay partition and an angle partition; and determine an angle traversal step size corresponding to each delay partition and a preset number of sensed objects in each joint partition. The sensing module 530 is configured to, for each joint partition, sense information about at most the preset number of sensed objects in the joint partition according to the delay-Doppler spectrum and the angle traversal step size of the joint partition. The second determination module 540 is configured to determine a trajectory within a sensing range according to information sensed in multiple sensing periods. The third determination module 550 is configured to determine a moving object according to the trajectory.

The balanced wireless sensing apparatus of this embodiment is configured to implement the balanced wireless sensing method of any embodiment of the present application. The implementation principles and technical effects of the balanced wireless sensing apparatus of this embodiment are similar to those of the balanced wireless sensing method of any embodiment of the present application and thus are not described here for brevity.

Based on the previous embodiments, variant embodiments of the previous embodiments are provided. For brevity, only differences from the previous embodiments are described in the variant embodiments.

In an embodiment, the partitioning module 520 includes a delay partitioning unit and an angle partitioning unit.

The delay partitioning unit is configured to partition the delay range of the sensed received signal into one or more delay partitions. The delay partitions have the same or different lengths. The angle partitioning unit is configured to, for each of the delay partitions, partition the delay partition into angle partitions. The angle partitions include one or more horizontal angle partitions and one or more elevation angle partitions. The horizontal angle partitions have the same or different lengths. The elevation angle partitions have the same or different lengths.

In an embodiment, the angle partitioning unit is configured to partition the delay partition into angle partitions according to the delay magnitude of the delay partition.

In an embodiment, the number of angle partitions in the nth delay partition is greater than or equal to the number of angle partitions in the (n - 1)th delay partition, and the delay of the nth delay partition is greater than the delay of the (n - 1)th delay partition.

In an embodiment, the angle traversal step size of the mth delay partition is less than or equal to the angle traversal step size of the (m - 1)th delay partition, and the delay of the mth delay partition is greater than the delay of the (m - 1)th delay partition.

In an embodiment, the sending module 530 is configured to, for each joint partition, perform direction filtering on the delay-Doppler spectrum in the joint partition in the angle traversal range of the joint partition by using the angle traversal step size of the delay partition of the joint partition to obtain a first delay-Doppler spectrum; and for the first delay-Doppler spectrum in each joint partition, sense information about at most the preset number of sensed objects in the joint partition.

In an embodiment, the angle traversal range of the joint partition is determined according to the angle range corresponding to the angle partition of the joint partition.

In an embodiment, the sending module 530 is configured to, for each joint partition, traverse all angles in the angle traversal range of the joint partition by using the angle traversal step size of the delay partition of the joint partition to obtain filtered delay-Doppler spectrums corresponding to the all angles; and select the first delay-Doppler spectrum from the filtered delay-Doppler spectrums corresponding to the all angles of the joint partition.

In an embodiment, the value of the delay-frequency offset pair in the first delay-Doppler spectrum is the maximum value among pairs in the filtered delay-Doppler spectrums corresponding to the all traversed angles of the corresponding joint partition; and the angle of the pair is the angle corresponding to the filtered delay-Doppler spectrum with the maximum value.

In an embodiment, the sending module 530 is configured to, for the first delay-Doppler spectrum in each joint partition, select at most the preset number of first delay-Doppler spectrums above a noise threshold in descending order of energies of all delay-frequency offset pairs in the first delay-Doppler spectrum; use the selected first delay-Doppler spectrums as second delay-Doppler spectrums; and calculate positions of all sensed objects in the second delay-Doppler spectrums according to the second delay-Doppler spectrums. Information about the sensed objects includes delays, frequency offsets, angles, positions, and energies corresponding to the second delay-Doppler spectrums.

In an embodiment, the second determination module 540 is configured to arrange, in time order, the information sensed in the multiple sensing periods; and determine the trajectory within the sensing range according to the arrangement result.

In an embodiment, adjacent points in the trajectory satisfy at least one of the following conditions: The sensing time interval between the pth point and the (p + 1)th point is less than a set time threshold; or the position interval between the pth point and the (p + 1)th point is less than a set position threshold.

In an embodiment, the third determination module 550 is configured to determine each trajectory as one moving object.

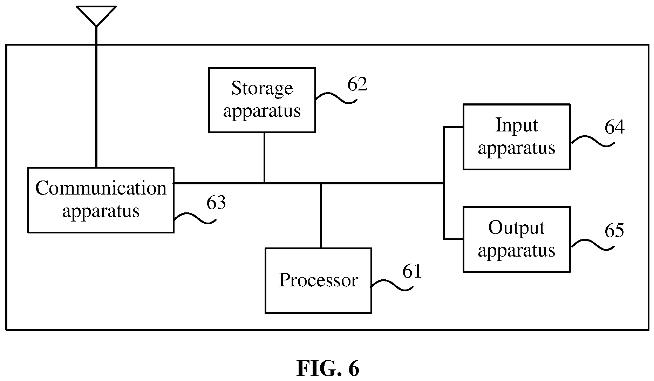

In an example embodiment, an embodiment of the present application provides a communication node. FIG. 6 is a block diagram of a communication node according to an embodiment of the present application. As shown in FIG. 6, the communication node of the present application includes one or more processors 61 and a storage apparatus 62. One or more processors 61 may be disposed in the communication node. FIG. 6 uses one processor 61 as an example. The storage apparatus 62 is configured to store one or more programs. When executed by the one or more processors 61, the one or more programs cause the one or more processors 61 to perform the balanced wireless sensing method of any embodiment of the present application.

The communication node also includes a communication apparatus 63, an input apparatus 64, and an output apparatus 65.

The processor 61, the storage apparatus 62, the communication apparatus 63, the input apparatus 64, and the output apparatus 65 in the communication node may be connected via a bus or in other manners. FIG. 6 uses connection via a bus as an example.

The input apparatus 64 may be configured to receive inputted digital or character information and generate key signal input related to user settings and function control of the communication node. The output apparatus 65 may include a display device such as a display screen.

The communication apparatus 63 may include a receiver and a sender. The communication apparatus 63 is configured to perform information transceiving communication under the control of the processor 61.

As a computer-readable storage medium, the storage apparatus 62 may be configured to store software programs, computer-executable programs, and modules, such as program instructions/modules (for example, the first determination module 510, the partitioning module 520, the sensing module 530, the second determination module 540, and the third determination module 550 in the balanced wireless sensing apparatus) corresponding to the balanced wireless sensing method of any embodiment of the present application. The storage apparatus 62 may include a program storage region and a data storage region, where the program storage region may store an operating system and an application program required by at least one function while the data storage region may store data created depending on use of the communication node. Additionally, the storage apparatus 62 may include a high-speed random-access memory and may further include a nonvolatile memory, such as at least one magnetic disk memory, a flash memory, or another nonvolatile solid-state memory. In some examples, the storage apparatus 62 may include memories remote from the processor 61. These remote memories may be connected to the communication node via a network. Examples of the preceding network include, but are not limited to, the Internet, an intranet, a local area network, a mobile communication network, and a combination thereof.

An embodiment of the present application provides a storage medium storing a computer program which, when executed by a processor, causes the processor to perform the balanced wireless sensing method of any embodiment of the present application.

The balanced wireless sensing method includes determining a delay-Doppler spectrum of a received signal in the current sensing period; jointly partitioning the delay range and the angle range of the sensed received signal, where a joint partition includes a delay partition and an angle partition; and determining an angle traversal step size corresponding to each delay partition and a preset number of sensed objects in each joint partition; for each joint partition, sensing information about at most the preset number of sensed objects in the joint partition according to the delay-Doppler spectrum and the angle traversal step size of the joint partition; determining a trajectory within a sensing range according to information sensed in multiple sensing periods; and determining a moving object according to the trajectory.

A computer storage medium in an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Examples of the computer-readable storage medium include (a non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc ROM (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable media may be transmitted by any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are example embodiments of the present application and are not intended to limit the scope of the present application. It is to be understood by those skilled in the art that the term terminal device encompasses any appropriate type of radio user device such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules and functions, or may represent a combination of program operations and logic circuits, modules and functions. The computer program may be stored in the memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1. A balanced wireless sensing method, comprising:

   determining a delay-Doppler spectrum of a received signal in a current sensing period;
   jointly partitioning a delay range and an angle range of the sensed received signal, wherein a joint partition comprises a delay partition and an angle partition; and determining an angle traversal step size corresponding to each delay partition and a preset number of sensed objects in each joint partition;
   for each joint partition, sensing information about at most the preset number of sensed objects in the joint partition according to the delay-Doppler spectrum and an angle traversal step size of the joint partition;
   determining a trajectory within a sensing range according to information sensed in multiple sensing periods; and
   determining a moving object according to the trajectory.

2. The method of claim 1, wherein jointly partitioning the delay range and the angle range of the sensed received signal comprises:

   partitioning the delay range of the sensed received signal into one or more delay partitions; and
   for each of the delay partitions, partitioning the delay partition into angle partitions, wherein the angle partitions comprise one or more horizontal angle partitions and one or more elevation angle partitions.

3. The method of claim 2, wherein for each of the delay partitions, partitioning the delay partition into the angle partitions comprises:
partitioning the delay partition into the angle partitions according to a delay magnitude of the delay partition.

4. The method of claim 3, wherein

a number of angle partitions in an nth delay partition of the delay partitions is greater than or equal to a number of angle partitions in an (n - 1)th delay partition of the delay partitions; and
a delay of the nth delay partition is greater than a delay of the (n - 1)th delay partition.

5. The method of claim 1, wherein

an angle traversal step size of an mth delay partition of the delay partitions is less than or equal to an angle traversal step size of an (m - 1)th delay partition of the delay partitions; and
a delay of the mth delay partition is greater than a delay of the (m - 1)th delay partition.

6. The method of claim 1, wherein for each joint partition, sensing the information about at most the preset number of sensed objects in the joint partition according to the delay-Doppler spectrum and the angle traversal step size of the joint partition comprises:

for each joint partition, performing direction filtering on the delay-Doppler spectrum in the joint partition in an angle traversal range of the joint partition by using the angle traversal step size of the delay partition of the joint partition to obtain a first delay-Doppler spectrum; and
for the first delay-Doppler spectrum in each joint partition, sensing the information about at most the preset number of sensed objects in the joint partition.

7. The method of claim 6, wherein the angle traversal range of the joint partition is determined according to an angle range corresponding to the angle partition of the joint partition.

8. The method of claim 6, wherein for each joint partition, performing the direction filtering on the delay-Doppler spectrum in the joint partition in the angle traversal range of the joint partition by using the angle traversal step size of the delay partition of the joint partition to obtain the first delay-Doppler spectrum comprises:

for each joint partition, traversing all angles in the angle traversal range of the joint partition by using the angle traversal step size of the delay partition of the joint partition to obtain filtered delay-Doppler spectrums corresponding to the all angles; and
selecting the first delay-Doppler spectrum from the filtered delay-Doppler spectrums corresponding to the all angles of the joint partition.

9. The method of claim 8, wherein a value of a delay-frequency offset pair in the first delay-Doppler spectrum is a value with a maximum magnitude among pairs in the filtered delay-Doppler spectrums corresponding to the all traversed angles of the corresponding joint partition; and an angle of the pair is an angle corresponding to a filtered delay-Doppler spectrum with the maximum magnitude.

10. The method of claim 6, wherein for the first delay-Doppler spectrum in each joint partition, sensing the information about at most the preset number of sensed objects in the joint partition comprises:

for first delay-Doppler spectrums in all joint partitions, selecting at most the preset number of first delay-Doppler spectrums above a noise threshold in descending order of energies of all delay-frequency offset pairs in the first delay-Doppler spectrums;
using the selected first delay-Doppler spectrums as second delay-Doppler spectrums; and
calculating positions of all sensed objects in the second delay-Doppler spectrums according to the second delay-Doppler spectrums,
wherein the information about the sensed objects comprises delays, frequency offsets, angles, positions, and energies corresponding to the second delay-Doppler spectrums.

11. The method of claim 1, wherein determining the trajectory within the sensing range according to the information sensed in the multiple sensing periods comprises:

arranging, in time order, the information sensed in the multiple sensing periods; and
determining the trajectory within the sensing range according to an arrangement result.

12. The method of claim 11, wherein adjacent points in the trajectory satisfy at least one of the following conditions:

a sensing time interval between a pth point and a (p + 1)th point is less than a set time threshold; or
a position interval between the pth point and the (p + 1)th point is less than a set position threshold.

13. The method of claim 1, wherein determining the moving object according to the trajectory comprises:

determining each trajectory as one moving object.

14. A communication node, comprising:

at least one processor; and
a storage apparatus configured to store at least one program,
wherein the at least one processor is configured to perform the balanced wireless sensing method of any one of claims 1 to 13 when executing the at least one program.

15. A storage medium storing a computer program which, when executed by a processor, causes the processor to perform the balanced wireless sensing method of any one of claims 1 to 13.

**FIG. 1**

**FIG. 2**

20

Sensed object

21

10

Moving sensed
object

Communication
node

Interference
sensed object

22

**FIG. 3**

Determine a delay-Doppler spectrum of a received signal in the current
sensing period

S110

Jointly partition the delay range and the angle range of the sensed
received signal, where a joint partition includes a delay partition and an
angle partition; and determine an angle traversal step size
corresponding to each delay partition and a preset number of sensed
objects in each joint partition

S120

For each joint partition, sense information about at most the preset
number of sensed objects in the joint partition according to the delay-
Doppler spectrum and the angle traversal step size of the joint partition

S130

Determine a trajectory within a sensing range according to information
sensed in multiple sensing periods

S140

Determine a moving object according to the trajectory

S150

**FIG. 4A**

a1

a2

a3

**FIG. 4B**

△**2**

△**1**

△**3**

△**4**

d1    d2    d3    d4

**FIG. 4C**

**FIG. 4D**

**FIG. 4E**

**FIG. 4F**

**FIG. 4G**

**FIG. 4H**

**FIG. 4I**

**FIG. 4J**

**FIG. 4K**

**FIG. 4L**

$Ts160_248H-16_3V4_8m15k2f5_72$

**FIG. 4M**

$Ts160_248H-16_6V4_8m15k2f5_72$

**FIG. 4N**

FIG. 4O

FIG. 4P

**FIG. 4Q**

**FIG. 5**

**FIG. 6**

<div align="center">INTERNATIONAL SEARCH REPORT</div>

| | International application No. |
|---|---|
| | **PCT/CN2023/096987** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXT, CNKI: 泛在智能化, 泛在感知, 多普勒, 时延, 角度, 分区, 多目标, 轨迹, sense, doppler, delay, angle, group, multiple, target, track

**C. DOCUMENTS CONSIDERED TO BE RELEVANT**

| Category* | Citation of document, with indication, where appropriate, of the relevant passages | Relevant to claim No. |
|---|---|---|
| A | CN 113406589 A (NORTHWESTERN POLYTECHNIC UNIVERSITY) 17 September 2021 (2021-09-17)<br>    description, paragraphs [0040]-[0067] | 1-15 |
| A | CN 105790893 A (CHINA ACADEMY OF TELECOMMUNICATIONS TECHNOLOGY) 20 July 2016 (2016-07-20)<br>    entire document | 1-15 |
| A | US 2020116850 A1 (INFINEON TECHNOLOGIES AG) 16 April 2020 (2020-04-16)<br>    entire document | 1-15 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 July 2023** | **20 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center"><strong>INTERNATIONAL SEARCH REPORT</strong><br><strong>Information on patent family members</strong></td><td colspan="2">International application No.<br><strong>PCT/CN2023/096987</strong></td></tr>
</table>

| Patent document cited in search report | Publication date (day/month/year) | Patent family member(s) | Publication date (day/month/year) |
|---|---|---|---|
| CN     113406589     A | 17 September 2021 | None | |
| CN     105790893     A | 20 July 2016 | None | |
| US     2020116850    A1 | 16 April 2020 | EP     3640675     A1 | 22 April 2020 |
|  |  | CN     111060903     A | 24 April 2020 |

Form PCT/ISA/210 (patent family annex) (July 2022)